# EUROPÄISCHE PATENTSCHRIFT

(11) **EP 3 386 861 B1**
(45) Veröffentlichungstag und Bekanntmachung des Hinweises auf die Patenterteilung: **12.02.2020**
(21) Anmeldenummer: 16829230.8
(22) Anmeldetag: 12.12.2016
(51) Int. Cl.: B64D 17/54

(54) **FALLSCHIRMANORDNUNG ZUR BEFESTIGUNG AN EINER PERSON SOWIE AUSLÖSEVERFAHREN**
PARACHUTE ARRANGEMENT FOR ATTACHMENT TO A PERSON AND METHOD OF DEPLOYING IT
DISPOSITIF DE PARACHUTE DESTINÉ À ÊTRE ATTCHÉ À UNE PERSONNE ET PROCÉDÉ POUR LE DÉPLOYER

(30) Priorität: 11.12.2015 DE 102015121599
(43) Veröffentlichungstag der Anmeldung: 17.10.2018
(73) Patentinhaber: Cloth, Helmut, 33104 Paderborn (DE)
(72) Erfinder: Cloth, Helmut, 33104 Paderborn (DE)
(74) Vertreter: Ostermann, Thomas
(86) Internationale Anmeldenummer: PCT/DE2016/100573
(87) Internationale Veröffentlichungsnummer: WO 2017/097292

(56) Entgegenhaltungen:
- EP-A1- 1 892 186
- DE-A1-102011 105 059
- US-A1- 2009 189 022

## Beschreibung

Die Erfindung betrifft eine Fallschirmanordnung zur Befestigung einer Person nach dem Oberbegriff des Patentanspruchs 1.

Ferner betrifft die Erfindung ein Verfahren zum automatischen Auslösen einer Fallschirmanordnung nach dem Oberbegriff des Patentanspruchs 4.

Eine automatische Auslösevorrichtung ist in einer Fallschirmanordnung integriert angeordnet und stellt sicher, dass ein Reserveschirm initiiert wird, wenn eine Fallschirmspringer beispielsweise während des Sprungs das Bewusstsein verliert und einen Hauptschirm der Fallschirmanordnung nicht manuell auslösen kann. Die automatische Auslösevorrichtung, die auch als Automatic Activation Device (AAD) bezeichnet wird, umfasst einen Drucksensor zur Erfassung eines Drucks in der Umgebung der Fallschirmanordnung und/oder eine Vorrichtung zur Höhenermittlung sowie eine Steuereinrichtung zur Ermittlung eines Auslösesignals für den Reserveschirm.

Der bisherige Stand der Technik bei AADs ist durch Verwendung einer festen Minimalhöhe und einer festen maximalen Sinkrate als Auslösekriterium gekennzeichnet.

Beide Werte werden üblicherweise durch Messung des umgebenden Luftdrucks in Abhängigkeit von der Zeit ermittelt.

Die meisten handelsüblichen Geräte verwenden dabei Algorithmen zur Kompensation der durch den turbulenten Luftstrom stark schwankenden Druckmesswerte.

Wenn die Sinkrate einen vorher definierten Maximalwert überschreitet und zugleich eine vorgegebene Minimalhöhe unterschritten wird, initiert das AAD die Öffnung des Reserveschirms oder Hauptschirms.

Da die Anforderungen für Minimalhöhe und maximale Sinkrate je nach Situation wechseln können, beispielsweise erfordern Tandemgeräte oder Schülergeräte andere Schwellwerte als Expertenversionen, werden AADs in verschiedenen Varianten angeboten bzw. erlauben eine Änderung der Einstellung vor dem Absprung.

Bisherige Geräte sind jedoch nicht in der Lage, die Auslösungskriterien während des Sprungs den Erfordernissen anzupassen und sie gegebenenfalls zu verändern.

Es gibt einige Situationen, die eine solche Anpassung sinnvoll erscheinen lassen, um zu einer Erhöhung der Sicherheit bei schwierigen Auslösungskriterien zu kommen.

Fallschirmabsprünge mit Verwendung sogenannter Wing Suits, also Anzüge mit segelartigen Verbindungen, machen das Erkennen der einzelnen Flugphasen schwer, denn sie befähigen den Springer bei geschlossenem Fallschirm die Sinkrate auf bis zu weniger als 20 m/s zu reduzieren, so dass ein handelsübliches AAD diese Situation nicht sicher von z.B. einer scharfen Kurve mit einem bereits geöffneten Schirm unterscheiden kann, die zu ähnlichen Sinkraten führt.

Während in solchen Fällen also auf der einen Seite diese Sinkrate bei noch geschlossenem Schirm schon zu einer Auslösung des Reserveschirms führen soll, wenn die Minimalhöhe unterschritten wird, muss auf der anderen Seite bei bereits geöffnetem Hauptschirm wieder eine höhere Sinkrate erlaubt werden, um versehentliche Reserveschirmauslösungen zu vermeiden, wenn der Springer Steilkurven am Schirm in niedriger Höhe ausführt.

Aus der DE 10 2011 105 059 A1 ist eine Fallschirmanordnung zur Befestigung an einer Person bekannt. Diese Fallschirmanordnung weist eine automatische Auslöseeinrichtung, einen Schirm, einen Drucksensor sowie eine Steuereinrichtung zur Ermittlung eines Auslösesignals auf. Die Steuereinrichtung wirkt auf eine Initiierungseinrichtung, mittels derer der Reserveschirm in Abhängigkeit von einem Auslösesignal der Steuereinrichtung freigegeben wird. Nachteilig an der bekannten Fallschirmanordnung ist, dass das Auslösekriterium fest vorgegeben ist. Ein entsprechendes Auslösesignal wird erzeugt, wenn eine vorgegebene Mindesthöhe bei gleichzeitiger Überschreitung einer maximalen Fallgeschwindigkeit unterschritten wird.

Aus der US 2009/189022 A1 sowie der EP 1 892 186 A1 sind Fallschirmanordnungen bekannt, bei der eine Auslösung des Reserveschirms in Abhängigkeit von fest vorgegebenen Parametern erfolgt. Eine Veränderung der Parameter während des Fluges ist nicht vorgesehen.

Aufgabe der vorliegenden Erfindung ist es, eine Fallschirmanordnung zur Befestigung an einer Person sowie ein Auslöseverfahren derart anzugeben, dass die Auslösesicherheit weiter verbessert wird.

Zur Lösung dieser Aufgabe weist die Erfindung die Merkmale des Patentanspruchs 1 und 4 auf.

Der besondere Vorteil der Erfindung besteht darin, dass in Abhängigkeit von Zustandsänderungen an der Fallschirmanordnung bzw. durch Anwendung der Fallschirmanordnung durch den Springer Parameter für das Erzeugen eines Auslösesignals des Reserveschirms geändert bzw. an die geänderten Rahmenbedingungen angepasst wird.

Die Erfindung wird nachfolgend beispielhaft erläutert:
schirms oder zweiten Fallschirms geeignet.

Es eignet sich generell für alle Anwendungen, die eine Anpassung der Auslösekriterien während des Sprungvorgangs bzw. Abwurfs wünschenswert erscheinen lassen. Obwohl die Erkennung der Schirmöffnung durch den Springer ein typisches Merkmal dieser Erfindung ist, kann sie auch auf Fälle angewendet werden, bei denen andere Ereignisse eine Anpassung des Entscheidungsvorgangs auslösen sollen.

Darunter sind typische Werte für Höhe und Sinkrate gezeigt, die zu einer Reserveschirmauslösung führen sollen.

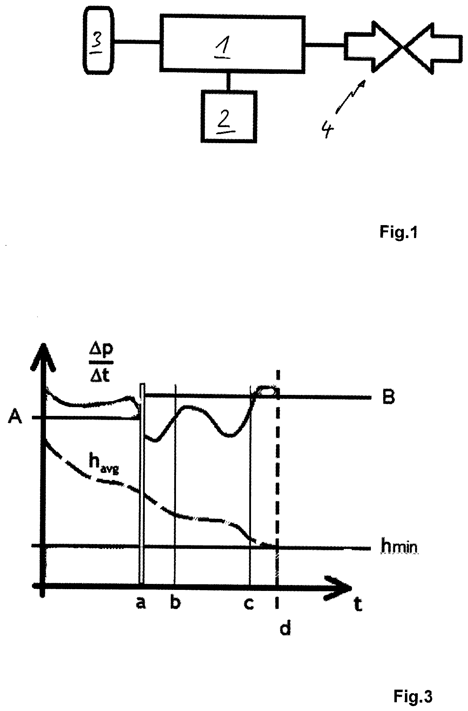

In Figur 1 ist eine automatische Auslösevorrichtung dargestellt, die im Wesentlichen aus einer Steuereinrichtung 1 enthaltend einen Mikrocontroller, aus einer Batterie 2 zur elektrischen Energieversorgung der Steuereinrichtung 1, aus einer Sensoreinheit 3 enthaltend einen Luftdrucksensor und/oder einen Beschleunigungssensor, und/oder aus einer Vorrichtung zur Höhenermittlung, insbesondere ein GPS-Modul, und aus einer Initierungseinrichtung 4 besteht. Die Initierungseinrichtung 4 kann einen Hauptschirm und einen Reserveschirm initieren und damit die Öffnung ermöglichen. Sie erhält jeweils ein Auslösesignal von der Steuereinrichtung 1 zur Initierung der Öffnung des Hauptschirms bzw. des Reserveschirms.

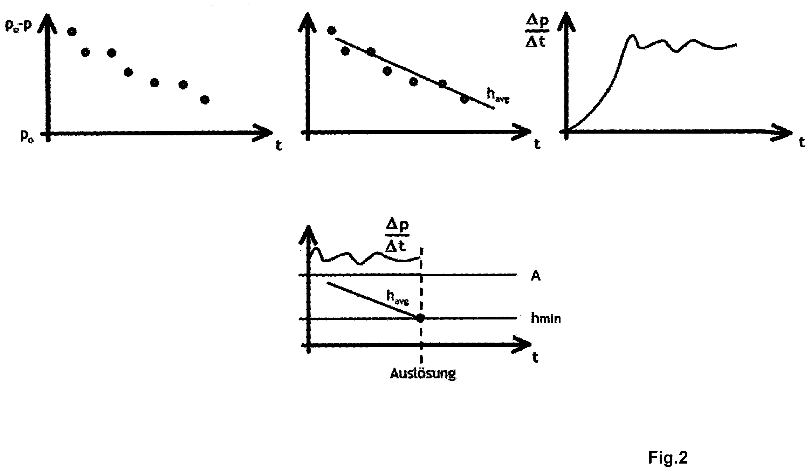

In Figur 2 sind typische Druckmesswerte und die daraus von der Steuereinrichtung 1 ermittelten Werte für die Höhe h_{avg} und die Sinkrate Δp/Δt in Abhängigkeit von der Zeit t dargestellt. Auslösekriterium für den Hauptschirm und damit Erzeugung des von der Steuereinrichtung 1 erzeugten Auslösesignals für den Hauptschirm ist die Unterschreitung einer Minimalhöhe hₘᵢₙ und die Überschreitung eines Fallgeschwindigkeitsschwellwertes A durch eine Momentanfallgeschwindigkeit Δp/Δt.

Im Folgenden wird die automatische Auslösung anhand der Figur 3 beschrieben.

Zum Zeitpunkt a wurde vom Springer der Hauptschirm oberhalb der Minimalhöhe hₘᵢₙ geöffnet, nachdem er zuvor im Freifall ein Manöver mit dem Wing Suit ausgeführt hat, mit dem die Sinkrate Δp/Δt so niedrig wurde (Momentanfallgeschwindigkeit kleiner als ein Fallgeschwindigkeitsschwellwert B), dass er bei Unterschreiten der Minimalhöhe hₘᵢₙ eine Reserveschirmöffnung verhindert hätte. Dies hätte wahrscheinlich tödliche Konsequenzen. Mit dem hier beschriebenen neuen Verfahren wäre es dennoch zu einer Auslösung des Reserveschirms gekommen, weil die Sinkrate oberhalb des für den Freifall angepassten Fallgeschwindigkeitsschwellwerts A lag.

Der Graph der Sinkrate Δp/Δt ist in Figur 3 durchgezogen dargestellt. Der Graph bezüglich der Höhen h_{avg} ist in der Figur 3 durch eine gestrichelte Linie gekennzeichnet.

Die Öffnung des Hauptschirms zum Zeitpunkt a wird vom Mikrocontroller der Steuereinrichtung 1 erkannt, und der Fallgeschwindigkeitsschwellwert A für die maximal erlaubte Sinkrate wird nun in einem Speicher der Steuereinrichtung 1 auf den Fallgeschwindigkeitsschwellwert B erhöht, um eine versehentliche Auslösung durch extreme, aber in ausreichender Höhe noch ungefährliche, vom Springer veranlasste Manöver zu verhindern.

Zum Zeitpunkt b wird eine Steilkurve ausgeführt, die die Sinkrate über den Fallgeschwindigkeitsschwellwert A im Freifall bringt. Allerdings würde es allein deswegen nicht zu einer Auslösung kommen, weil die erlaubte Minimalhöhe hₘᵢₙ noch nicht unterschritten wurde.

Zum Zeitpunkt c, diesmal in Bodennähe, führt der Springer erneut ein Manöver am offenen Hauptschirm aus, was die Sinkrate sehr hoch werden lässt. Zum Beispiel können dabei Kammern des Hauptschirms kollabieren und die Sinkrate schließlich über den Fallgeschwindigkeitsschwellwert B ansteigen. Der Springer versucht, die Kammern durch Pumpen mit den Bremsleinen wieder zu öffnen und vergisst dabei, dass er in Anbetracht der zu niedrigen Höhe bereits die Reserve öffnen müsste. Dabei wird sowohl die erlaubte Sinkrate am offenen Hauptschirm überschritten als auch der Schwellwert für die Minimalhöhe hₘᵢₙ unterschritten, so dass die automatische Auslösevorrichtung (AAD) anhand der nun geltenden Kriterien eine Reserveschirminitierung vornimmt. Hierzu erzeugt die Steuereinrichtung 1 ein entsprechendes Auslösesignal für die Initierungseinrichtung 4.

Zum Zeitpunkt d erfolgt die Auslösung des Reserveschirms, da sowohl die Momentanfallgeschwindigkeit Δp/Δt größer ist als der im Vergleich zum Fallgeschwindigkeitsschwellwert A höheren Fallgeschwindigkeitsschwellwert B einerseits und die Momentanhöhe h_{avg} kleiner ist als die Minimalhöhe hₘᵢₙ andererseits.

Der Fallgeschwindigkeitsschwellwert A kann z.B. in einem Bereich von 5 m/s bis 30 m/s, insbesondere 20 m/s, und der Fallgeschwindigkeitsschwellwert B in einem Bereich zwischen 30 m/s und 50 m/s, insbesondere 35 m/s oder 46 m/s, liegen.

In der Regel erfolgt eine Erhöhung des Fallgeschwindigkeitsschwellwertes. Die Änderung des Fallgeschwindigkeitsschwellwerts von A nach B erfolgt, nachdem die dafür vorgesehenen Kriterien erfüllt sind, vorzugsweise nach Öffnung des Hauptschirms. Die Fallgeschwindigkeitsschwellwerte A und B sind vorzugsweise konstant, möglicherweise auch nicht konstant bzw. änderbar.

## Patentansprüche

1. Fallschirmanordnung zur Befestigung an einer Person, wobei die Fallschirmanordnung eine automatische Auslösevorrichtung, einen Hauptschirm und einen Reserveschirm aufweist,
- mit einem Drucksensor (3) zur Erfassung eines Drucks (p) in der Umgebung der Fallschirmanordnung und/oder eine Vorrichtung zur Höhenermittlung,
- mit einer Steuereinrichtung (1) zur Ermittlung eines Auslösesignals für den Haupt- oder Reserveschirm, wobei das Auslösesignal erzeugt wird, wenn eine in der Steuereinrichtung (1) berechnete Momentanhöhe (h_{avg}) kleiner ist als eine vorgegebene Mininmalhöhe (hₘᵢₙ) und wenn eine in der Steuereinrichtung (1) berechnete Momentanfallgeschwindigkeit (Δp/Δt) größer ist als ein vorgegebener Fallgeschwindigkeitsschwellwert (A),
- mit einer Initierungseinrichtung (4) zum Freigeben des Haupt- oder Reserveschirms in Abhängigkeit von dem Auslösesignal der Steuereinrichtung (1),
**dadurch gekennzeichnet, dass** die Steuereinrichtung (1) über Mittel verfügt, derart, dass bei einer durch ein Öffnen des Hauptschirms gebildeten Zustandsänderung der Fallschirmanordnung der vorgegebene Fallgeschwindigkeitsschwellwert (A) verändert wird, wobei der vorgegebene Fallgeschwindigkeitsschwellwert (A) auf einen weiteren Fallgeschwindigkeitsschwellwert (B) angehoben wird.

2. Fallschirmanordnung nach Anspruch 1, **dadurch gekennzeichnet, dass** der vorgegebene Fallgeschwindigkeitsschwellwert (A) und der weitere Fallgeschwindigkeitsschwellwert (B) derart gewählt sind,
- dass bei geschlossenem Hauptschirm das Auslösesignal erzeugt wird, wenn die Momentanhöhe kleiner ist als die vorgegebene Minimalhöhe und die Momentanfallgeschwindigkeit größer ist als der vorgegebene Fallgeschwindigkeitsschwellwert (A), und
- dass bei offenem Hauptschirm das Auslösesignal erzeugt wird, wenn die Momentanhöhe kleiner ist als die vorgegebene Minimalhöhe und die Momentanfallgeschwindigkeit größer ist als der höhere Fallgeschwindigkeitsschwellwert (B).

3. Fallschirmanordnung nach einem der Ansprüche 1 oder 2, **dadurch gekennzeichnet, dass** der Fallgeschwindigkeitsschwellwert (A) in einem Bereich von 5 m/s bis 30 m/s, insbesondere 20 m/s, und der Fallgeschwindigkeitsschwellwert (B) in einem Bereich zwischen 30 m/s und 50 m/s, insbesondere 35 m/s oder 46 m/s, liegt.

4. Verfahren zum automatischen Auslösen einer Fallschirmanordnung, wobei ein Auslösesignal für einen Hauptschirm und/oder Reserveschirm erzeugt wird, wenn eine Momentanfallhöhe (h_{avg}) kleiner ist als eine vorgegebene Minimalfallhöhe (hₘᵢₙ) und wenn eine Momentanfallgeschwindigkeit (Δp/Δt) größer ist als ein vorgegebener Fallgeschwindigkeitsschwellwert (A), **dadurch gekennzeichnet, dass** nach dem Öffnen des Hauptschirms der Fallgeschwindigkeitsschwellwert (A, B) verändert wird, so dass das Auslösesignal für den Reserveschirm und das Auslösesignal für den Hauptschirm fallgeschwindigkeitsabhängig unterschiedlich sind.

5. Verfahren nach Anspruch 4, **dadurch gekennzeichnet, dass** der Fallgeschwindigkeitsschwellwert (A) bis zum Zeitpunkt des Öffnens des Hauptschirms konstant und kleiner ist als der Fallgeschwindigkeitsschwellwert (B) zum Auslösen des Reserveschirms.

## Claims

1. A parachute assembly for fastening to a person, wherein the parachute assembly comprises an automatic deployment mechanism, a main parachute and a spare parachute,
- having a pressure sensor (3) for sensing a pressure (p) in the surroundings of the parachute assembly and/or a mechanism for determining the altitude,
- having a control device (1) for determining a deployment signal for the main parachute or spare parachute, wherein the deployment signal is generated when a current altitude (h_{avg}) calculated in the control device (1) is less than a predefined minimum altitude (hₘᵢₙ) and when a current falling velocity (Δp/Δt) calculated in the control device (1) is greater than a predefined falling velocity limit (A),
- having an initiation device (4) for releasing the main parachute or spare parachute as a function of the deployment signal of the control device (1),
**characterized in that** the control device (1) is provided with means such that the predefined falling velocity limit (A) is modified when a state of the parachute assembly changes as a result of an opening of the main parachute, wherein the predefined falling velocity limit (A) is increased to a further falling velocity limit (B).

2. The parachute assembly according to Claim 1, **characterized in that** the predefined falling velocity limit (A) and the further falling velocity limit (B) are selected such that
- the deployment signal is generated, with the main parachute closed, when the current altitude is less than the predefined minimum altitude and the current falling velocity is greater than the predefined falling velocity limit (A), and
- the deployment signal is generated, with the main parachute open, when the current altitude is less than the predefined minimum altitude and the current falling velocity is greater than the higher falling velocity limit (B).

3. The parachute assembly according to any one of Claims 1 or 2, **characterized in that** the falling velocity limit (A) lies in a range from 5 m/s to 30 m/s, in particular 20 m/s, and the falling velocity limit (B) lies in a range between 30 m/s and 50 m/s, in particular 35 m/s or 46 m/s.

4. A method for automatically deploying a parachute assembly, wherein a deployment signal is generated for a main parachute and/or spare parachute when a current falling altitude (h_{avg}) is less than a predefined minimum falling altitude (hₘᵢₙ) and when a current falling velocity (Δp/Δt) is greater than a predefined falling velocity limit (A), **characterized in that**, following the opening of the main parachute, the falling velocity limit (A, B) is modified such that the deployment signal for the spare parachute and the deployment signal for the main parachute are different depending on the falling velocity.

5. The method according to Claim 4, **characterized in that** the falling velocity limit (A) is constant up until the time that the main parachute opens and is less than the falling velocity limit (B) for deploying the spare parachute.

## Revendications

1. Arrangement de parachute destiné à être fixé sur une personne, sachant que l'arrangement de parachute présente un dispositif de déclenchement automatique, un parachute principal et un parachute de réserve,
- avec un capteur de pression (3) pour la saisie d'une pression (p) dans l'environnement de l'arrangement de parachute et / ou un dispositif de détermination d'altitude,
- avec un dispositif de commande (1) pour la détermination d'un signal de déclenchement pour le parachute principal et le parachute de réserve, sachant que le signal de déclenchement est généré quand une hauteur de chute momentanée (h_{avg}), calculée dans le dispositif de commande (1), est inférieure à une hauteur de chute minimum (hₘᵢₙ) prédéterminée et quand une vitesse de chute momentanée (Δp/Δt) est supérieure à une valeur de seuil de chute (A) prédéterminée,
- avec un dispositif d'initialisation (4) pour la libération du parachute principal et du parachute de réserve en fonction du signal de déclenchement du dispositif de commande (1),
**caractérisé en ce que**
le dispositif de commande (1) dispose de moyens de manière à ce que, lors d'une modification d'état de l'arrangement de parachute résultant de l'ouverture du parachute principal, la valeur de seuil de chute (A) prédéterminée est modifiée, sachant que la valeur de seuil de chute (A) prédéterminée est élevée à une autre valeur de seuil de chute (B).

2. Arrangement de parachute (1) selon la revendication 1,
**caractérisé en ce que**
la valeur de seuil de chute (A) prédéterminée et l'autre valeur de seuil de chute (B) sont choisies de manière à ce que,
- le parachute principal étant fermé, le signal de déclenchement est généré quand la hauteur momentanée est inférieure à la hauteur minimale prédéterminée et que la vitesse de chute momentanée est supérieure à la vitesse de seuil de chute prédéterminée (A),
- le parachute principal étant ouvert, le signal de déclenchement est généré quand la hauteur momentanée est inférieure à la hauteur minimale prédéterminée et que la vitesse de chute momentanée est supérieure à la vitesse de seuil de chute plus élevée (B).

3. Arrangement de parachute (1) selon revendication 1 ou 2,
**caractérisé en ce que**
la valeur de seuil de chute (A) est située dans une plage de 5 m/s à 30 m/s, en particulier de 20 m/s et la valeur de seuil de chute (B) est située dans une plage de 30 m/s à 50 m/s, en particulier de 35 m/s ou 46 m/s.

4. Procédé de déclenchement automatique d'un arrangement de parachute, sachant qu'un signal de déclenchement d'un parachute principal et / ou d'un parachute de réserve est généré quand une hauteur de chute momentanée (h_{avg}) est inférieure à une hauteur de chute minimum (hₘᵢₙ) prédéterminée et quand une vitesse de chute momentanée (Δp/Δt) est supérieure à une valeur de seuil de chute (A) prédéterminée, **caractérisé en ce que**, après l'ouverture du parachute principal, la valeur de seuil de chute (A, B) est modifiée de manière à ce que le signal de déclenchement du parachute de réserve et le signal de déclenchement du parachute principal de réserve diffèrent en fonction de la vitesse de chute.

5. Procédé selon la revendication 4,
**caractérisé en ce que**
la valeur de seuil de chute (A), jusqu'au moment de l'ouverture du parachute principal, est constante et inférieure à la valeur de seuil de chute (B) pour le déclenchement du parachute de réserve.
